# EUROPEAN PATENT APPLICATION

(11) **EP 1 092 749 A2**
(43) Date of publication of application: **18.04.2001**
(21) Application number: 00309026.3
(22) Date of filing: 13.10.2000
(51) Int. Cl.: C08K 9/06, C08L 9/00, C08G 77/18

(54) **Rubber compounding ingredient**

(30) Priority: 13.10.1999 JP 29109899
(71) Applicant: SHIN-ETSU CHEMICAL CO., LTD., Chiyoda-ku Tokyo (JP)
(72) Inventor: Yanagisawa, Hideyoshi, Shin-Etsu Chemical Co., Ltd, Usui-gun, Gunma-ken (JP); Yamamoto, Akira, Shin-Etsu Chemical Co., Ltd, Usui-gun, Gunma-ken (JP); Yamaya, Masaaki, Shin-Etsu Chemical Co., Ltd, Usui-gun, Gunma-ken (JP)
(74) Representative: Stoner, Gerard Patrick

(57) **Abstract**

A rubber compounding ingredient contains (A) a branched, organoxy group-containing polysiloxane with a number average molecular weight of 500-300,000, comprising 30-100 mol% of structural units (T units) of R-SiZ₃ wherein R is a monovalent C₁₋₁₈ hydrocarbon group, Z is OX or siloxane residue, X is H or a monovalent hydrocarbon group, and containing, among the T units, 10-50 mol% of branching structural units (T-3 units) of R-SiZ'₃ wherein R is as defined above and Z' is a siloxane residue, and (B) a silane coupling agent, the weight ratio of component (A) to (B) being from 95/5 to 5/95. The compounding ingredient assists in dispersing silica in rubber and improves physical properties of a rubber composition so that the composition is suited for the manufacture of tire treads.

## Description

This invention relates to a rubber compounding ingredient and a rubber composition using the same, and more particularly, to a rubber compounding ingredient which is compounded with rubber to formulate a rubber composition such that vulcanized physical properties including modulus, abrasion resistance and tanδ are improved.

### BACKGROUND

There have been widely used rubber compositions comprising a variety of base rubbers having silica blended therein. Silica-loaded rubber compositions having a low heat generating ability and improved abrasion resistance are typically used in forming tire treads. Although silica-loaded tire treads are good in grip on wet roads, the silica-loaded rubber compositions in unvulcanized state tend to undergo a viscosity increase and other detrimental changes, which detract from productivity. In particular, when silica and carbon are simultaneously mixed with base rubber in a simple manner, thorough mixing occurs between carbon and rubber to bring about intimate contact and reaction therebetween, but the mixing between silica and rubber is insufficient to disperse silica, failing to take full advantage of silica.

Although a number of proposals have been made to solve the above problem, none of them are satisfactory in practice. For example, it is known to add diethylene glycol and/or fatty acids, to add metal salts of carboxylic acids, and to pretreat silica with silicone fluid. See JP-A 6-248116, for example. None of them are acceptable on practical use.

With respect to scorching and a loss of gathering during mixing, there is no effective measure other than increasing the number of mixing cycles. When carbon and silica are blended, the current practice is to blend them separately or to increase the mixing time or the number of mixing cycles. Addressing the problem, JP-A 9-111044 proposes to add an alkoxylated, straight or cyclic SiH-containing polysiloxane. Use of this compound does not provide fully satisfactory results.

It would be desirable, therefore, to provide new means and a new rubber compounding ingredient which when compounded in a vulcanizable rubber composition, especially a silica-loaded vulcanizable rubber composition, could improve the workability thereof in the unvulcanized state without substantially detracting from intrinsic properties such as low heat generating ability and abrasion resistance.

We have found that the use of certain branched, organoxy group-containing polyxiloxanes, particularly in combination with silane coupling agent, and/or as powder treated or impregnated with such branched, organoxy group-containing polysiloxane, is effective for improving dispersion.

As described above, silica-loaded rubber compositions in the unvulcanized state have the drawback of poor workability although silica-loaded tire treads have satisfactory vulcanized physical properties. This drawback results probably from the presence of silanol groups on the silica surface. Due to the cohesive force of silanol groups, structured masses form in the unvulcanized rubber composition, resulting in an increased viscosity so that the composition becomes difficult to work.

In many silica-loaded rubber compositions, a silane coupling agent is additionally used for rubber reinforcement. Since the silane coupling agent can react with silanol groups in pores within silica particles, it is consumed, leading to a loss of reinforcement effect. This necessitates to blend an undesirably larger amount of the silane coupling agent. If a polar compound such as diethylene glycol is further added to the composition as in the prior art, the phenomenon that polar compounding ingredients such as a vulcanization accelerator are adsorbed is prevented to some extent, but not to a full extent. It is not avoided that the silane coupling agent and other substances capable of chemical bonding with silica particles bond to pores within silica particles.

In contrast, when (A) an organoxy group-containing polysiloxane having a number average molecular weight of 500 to 300,000 and a branched structure within a molecule and comprising 30 to 100 mol% of structural units (T units) of the formula (1):

R-SiZ₃ (1)

wherein R is a substituted or unsubstituted monovalent hydrocarbon group of 1 to 18 carbon atoms, Z is an OX group or siloxane residue, and X is hydrogen or a monovalent hydrocarbon group, and containing, among the T units, 10 to 50 mol% of branching structural units (T-3 units) of the formula (2):

R-SiZ'₃ (2)

wherein R is as defined above, and Z' is a siloxane residue, is compounded in a rubber composition, organoxysilyl groups react with silanol groups to cover surfaces of silica particles, solving the problems of the prior art, that is, effectively precluding a viscosity increase due to the cohesive force and polarity of silanol groups, and wasteful consumption of the silane coupling agent and polar additives such as a vulcanization accelerator. With respect to the silica surface processing efficiency, an organoxy group-containing polysiloxane having a branched structure in the molecule as proposed herein has been found better than conventional well-known alkoxy group-containing linear polysiloxanes. Since the branched polysiloxane used in the invention forms network bonds after reaction with silica so that hydrocarbon groups are oriented on the silica surface, it may get a better dispersion promoting effect than an alkoxy group-containing polysiloxane possessing no branched structure, offering a possibility of improving rubber properties.

Additional advantages have been found when the branched polysiloxane is one resulting from hydrolysis of an alkoxy group-containing polysiloxane of the following average compositional formula (3):

R-Si(Y)ₐO_{(3-a)/2} (3)

wherein R is as defined above, Y is an alkoxy group, and "a" is a positive number of 1.0 to 2.5, alone or along with another alkoxysilane or a partial hydrolyzate thereof. Unlike the conventional well-known alkoxy group-containing polysiloxane which is prepared by dehydrogenation reaction between a SiH group-containing polysiloxane and an alcohol, the branched polysiloxane can be prepared in a safe manner because dangerous hydrogen does not evolve during synthetic reaction. And the branched polysiloxane provides a very safe rubber compounding ingredient because no hydrogen gas evolves during rubber milling due to the absence of residual SiH groups in the polysiloxane molecule. The alkoxy group-containing polysiloxane of the average compositional formula (3) : R-Si(Y)ₐO_{(3-a)/2} is useful in preparing a structure containing branching structural units (T-3 units) of the formula (2): R-SiZ'₃ in the branched, organoxy group-containing polysiloxane. Then, the branched, organoxy group-containing polysiloxane is more uniform in structure than the conventional well-known alkoxy group-containing polysiloxane prepared using an alkoxysilane of the formula: R-Si(Y)₃ wherein R is a substituted or unsubstituted monovalent hydrocarbon group of 1 to 18 carbon atoms and Y is an alkoxy group. This can give better orientation on the silica surface and more effective dispersion of silica, succeeding in improving workability without detracting from vulcanized physical properties.

By compounding the branched polysiloxane along with a silane coupling agent, or a powder treated/impregnated with the branched polysiloxane in a rubber composition, the rubber composition becomes more dispersible and easily workable which is vulcanized into rubber having satisfactory physical properties.

In one aspect, the invention provides a rubber compounding ingredient comprising (A) an organoxy group-containing polysiloxane and (B) a silane coupling agent, the weight ratio of component (A) to (B) being from 95/5 to 5/95.

In another aspect, the invention provides a rubber compounding ingredient comprising (A) an organoxy group-containing polysiloxane and (C) a powder impregnated therewith. The weight ratio of component (A) to (C) is preferably from 70/30 to 5/95.

The organoxy group-containing polysiloxane (A) has a number average molecular weight of 500 to 300,000 and a branched structure within a molecule and is comprised of 30 to 100 mol% of structural units (T units) of the formula (1):

R-SiZ₃ (1)

wherein R is a substituted or unsubstituted monovalent hydrocarbon group of 1 to 18 carbon atoms, Z is an OX group or siloxane residue, and X is hydrogen or a monovalent hydrocarbon group, and containing, among the T units, 10 to 50 mol% of structural units (T-3 units) of the formula (2):

R-SiZ'₃ (2)

wherein R is as defined above, and Z' is a siloxane residue, the T-3 units providing branching sites.

Also contemplated herein is a rubber composition comprising, in admixture, a base rubber and a compounding ingredient defined above.

### FURTHER DETAILS, OPTIONS AND PREFERENCES

The rubber compounding ingredient of the invention includes (A) a branched organoxy group-containing polysiloxane having a number average molecular weight of 500 to 300,000. This polysiloxane contains 30 to 100 mol% of structural units (T units) of the formula (1):

R-SiZ₃ (1)

wherein R is a substituted or unsubstituted monovalent hydrocarbon group of 1 to 18 carbon atoms, Z is an OX group or siloxane residue, and X is hydrogen or a monovalent hydrocarbon group. The polysiloxane contains, among the T units, 10 to 50 mol% of structural units (T-3 units) of the formula (2):

R-SiZ'₃ (2)

wherein R is as defined above, and Z' is a siloxane residue, the T-3 units becoming branching sites.

Herein, R stands for substituted or unsubstituted monovalent hydrocarbon groups of 1 to 18 carbon atoms, preferably 1 to 10 carbon atoms, for example, alkyl groups such as methyl, ethyl, propyl, isopropyl, butyl, t-butyl, hexyl, cyclohexyl, octyl and decyl; alkenyl groups such as vinyl, allyl, 5-hexenyl and 9-decenyl; aryl groups such as phenyl; and aralkyl groups such as benzyl and phenylethyl. Exemplary substituted monovalent hydrocarbon groups correspond to the foregoing unsubstituted monovalent hydrocarbon groups of 1 to 18 carbon atoms in which some or all of the hydrogen atoms are replaced by substituents. Examples of useful substituents include (i) halogen atoms such as fluorine and chlorine, (ii) epoxy functional groups such as glycidoxy and epoxycyclohexyl, (iii) (meth)acrylic functional groups such as methacrylic and acrylic, (iv) amino functional groups such as amino, aminoethylamino, phenylamino and dibutylamino, (v) sulfurous functional groups such as mercapto and tetrasulfide, (vi) alkyl ether functional groups such as polyoxyalkylene alkyl ether, (vii) anionic groups such as carboxyl and sulfonyl, and (viii) quaternary ammonium salt structure-containing groups.

Z is an OX group or siloxane residue wherein X is hydrogen or a monovalent hydrocarbon group. The monovalent hydrocarbon groups represented by X are preferably those of 1 to 8 carbon atoms, especially 1 to 4 carbon atoms, including alkyl, alkenyl and aryl groups as exemplified for R. Preferred monovalent hydrocarbon groups are alkyl groups, specifically methyl, ethyl, propyl and butyl. Preferred of the OX group are OH, methoxy, ethoxy, propoxy and butoxy groups. The siloxane residue is a group that bonds with an adjacent silicon atom via an oxygen atom to form a siloxane bond (O-Si=) and can be represented by O_{1/2} because it shares the oxygen atom with the adjacent silicon atom. If all Z's in R-SiZ₃ are siloxane residues, this formula can be represented as R-SiO_{3/2}. It is understood that Z's may be the same or different. At least one of Z's in the constituent unit represented by R-SiZ₃ must be a siloxane residue.

The branched polysiloxane used herein contains 30 to 100 mol% of T units of the formula (1) as mentioned above, preferably 50 to 100 mol%, and more preferably 80 to 100 mol% of T units. Among the T units, 10 to 50 mol%, preferably 10 to 40 mol%, and more preferably 10 to 30 mol% (based on the branched polysiloxane) are structural units of the formula (2): R-SiZ'₃ wherein R is as defined above and Z' is a siloxane unit as defined above. The reminder of the T units are those having one or two siloxane residues. In order that the branched polysiloxane react with silanol groups on the silica surface, the inclusion of an organoxy group, especially alkoxy group is effective. The branched polysiloxane (A) should have at least one organoxy group per molecule. The organoxy group content is at least one per molecule, with the preferred upper limit being 40% by weight. More than 40 wt% sometimes gives difficulties with number average molecular weight and the requirement of T units and T-3 units. It is noted that the OX group may be situated at any position on the polysiloxane including its backbone, side chains and ends.

A lower proportion of T units of the formula (1) usually results in less network structures formed upon reaction with silica, less orientation of hydrocarbon groups on the silica surface, and less dispersion improvement. A lower proportion of T-3 units of the formula (2), like a lower proportion of T units, may result in less dispersion improvement whereas a higher proportion of T-3 units of the formula (2) may result in less reactivity with silica and poor rubber physical properties.

As additional constituent units, the branched polysiloxane may contain 0 to 10 mol% of M units represented by R₃SiZ, 0 to 50 mol% of D units represented by R₂SiZ₂, and 0 to 30 mol% of Q units represented by SiZ₄ wherein R and Z are as defined above.

The branched polysiloxane (A) has a number average molecular weight of 500 to 300,000, and preferably 1,000 to 10,000.

It is requisite that the polysiloxane used herein have a branched structure within its molecule. Possessing such a spreading molecular structure is effective in improving processing efficiency.

The organoxy group-containing branched polysiloxane (A) is preferably one prepared or preparable by effecting single hydrolysis of an alkoxy group-containing polysiloxane of the following average compositional formula (3):

R-Si(Y)ₐO_{(3-a)/2} (3)

wherein R is as defined above, Y is an alkoxy group, and "a" is a positive number of 1.0 to 2.5, or a partial hydrolyzate thereof, optionally in the presence of a catalyst. Alternatively, the branched polysiloxane (A) is preparable by effecting cohydrolysis of an alkoxy group-containing polysiloxane of the formula (3) or a partial hydrolyzate thereof and another alkoxysilane or a partial hydrolyzate thereof, optionally in the presence of a catalyst. Examples of the catalyst used herein include tin compounds such as dibutyltin dilaurate, titanium compounds such as tetrabutyl titanate, acids such as acetic acid, oxalic acid, hydrochloric acid, sulfuric acid, nitric acid, methanesulfonic acid, and trifluoromethanesulfonic acid, bases such as sodium hydroxide, potassium hydroxide and DBU, and solid catalyst such as ion exchange resins.

Since the alkoxy group-containing polysiloxane of the formula (3) leads to a reduced amount of alcohol formed upon hydrolysis and an improved pot yield in the preparation of the branched organoxy group-containing polysiloxane, the use of the alkoxy group-containing polysiloxane of the formula (3) is advantageous over the hydrolysis of an alkoxysilane represented by R-Si(Y)₃ wherein R is a substituted or unsubstituted monovalent hydrocarbon group of 1 to 18 carbon atoms and Y is a monovalent alkoxy group. Also the alkoxy group-containing polysiloxane of the formula (3) is useful in preparing a structure containing branching structural units (T-3 units) of the formula (2): R-SiZ'₃ in the branched, organoxy group-containing polysiloxane. An alkoxy group-containing polysiloxane of the formula (3) can be obtained by reacting a chlorosilane of the following general formula (4):

R-SiCl₃ (4)

wherein R is as defined above with water in the presence of an alcohol, followed by distilling off of the residual water and alcohol.

The invention requires that the branched,
organoxy group-containing polysiloxane contain T units that contain branching structural units (T-3 units) of the formula (2): R-SiZ'₃. A compound having such a structure is prepared by merely adjusting the amount of water used in hydrolysis such that the compound may have a number average molecular weight of at least 500.

On use, the branched, organoxy group-containing polysiloxane (A) is preferably compounded at at least about 0.2 wt%, more preferably at least about 1.0 wt% of the entire rubber composition. The preferred maximum is about 30 wt%, more preferably about 10wt%. Insufficient branched, organoxy group-containing polysiloxane may fail to achieve the desired effect. Excessive amounts may lead to polysiloxane unbound to silica bleeding out of the vulcanized product.

The rubber compounding ingredient according to the first aspect of the invention is an admixture of (A) the branched, organoxy group-containing polysiloxane and (B) a silane coupling agent. The silane coupling agent used herein may be any of conventional silane coupling agents commonly used along with silica fillers in the prior art. Typical examples of the silane coupling agent include vinyltrimethoxysilane, vinyltriethoxysilane, γ-glycidoxy-propyltrimethoxysilane, γ-aminopropyltriethoxysilane, β-aminoethyl-γ-aminopropyltrimethoxysilane, γ-mercaptopropyl-trimethoxysilane, γ-mercaptopropyltriethoxysilane, γ-methacryloxypropyltrimethoxysilane, bis[3-(triethoxysilyl)-propyl]tetrasulfide, bis[3-(triethoxysilyl)propyl]disulfide, and bis[3-(triethoxysilyl)propyl]trisulfide. Of these, bis[3-(triethoxysilyl)propyl]tetrasulfide, bis[3-(triethoxysilyl)propyl]disulfide, and bis[3-(triethoxy-silyl)propyl]trisulfide and mixtures thereof are most preferable for workability, reinforcement, and abrasion resistance improvement.

When the compounding ingredient comprising, in admixture, the branched, organoxy group-containing polysiloxane (A) and the silane coupling agent (B) is compounded in a vulcanizable rubber composition, there are obtained advantages over the prior art that the amount of the silane coupling agent (B) used can be reduced and abrasion resistance is further improved. An appropriate amount of the silane coupling agent (B) used is e.g. such that the weight ratio of the branched, organoxy group-containing polysiloxane (A) to the silane coupling agent (B) may range from 95/5 to 5/95, and preferably from 80/20 to 60/40. A less amount of the silane coupling agent (B) may fail to achieve the desired effect whereas an excessive amount may cause scorching in the mixing and extrusion steps.

The rubber compounding ingredient according to the second aspect of the invention is a powder (C) which is impregnated with the branched, organoxy group-containing polysiloxane (A). The powder used herein is any of powders commonly blended in conventional rubber compositions, for example, inert powders such as carbon black, talc, calcium carbonate, and stearic acid as well as silica. By the term "inert" it is meant that the powder is least reactive with the branched, organoxy group-containing polysiloxane (A). An appropriate amount of the powder (C) used is such that e.g. the weight ratio of the branched, organoxy group-containing polysiloxane (A) to the powder (C) may range from 70/30 to 5/95, and preferably from 60/40 to 30/70. A less amount of the powder leads to too rapid reaction between silica and polysiloxane and a loss of reinforcement. An excessive amount of the powder leads to less effective surface treatment of silica with the polysiloxane.

On use, the rubber compounding ingredients according to the first and second aspects of the invention are compounded in rubber compositions. The vulcanizable rubber compositions according to the invention are based on rubber, which may be any desired one of a variety of rubbers commonly used in conventional rubber compositions. Exemplary rubbers include natural rubber (NR), polyisoprene rubber (IR), diene rubbers such as styrene-butadiene copolymer rubbers (SBR), polybutadiene rubbers (BR), acrylonitrile-butadiene copolymer rubbers (NBR) and butyl rubber (IIR), and ethylene-propylene copolymer rubbers (EPR, EPDM), alone or a blend of two or more. For tire tread applications, silicone rubber is undesirable because of the lack of strength, and non-silicone rubbers as typified by the foregoing ones are desirable.

The rubber composition is generally formulated by blending the base rubber with at least silica and the compounding ingredient. Specifically, about 5 to 100 parts, preferably about 5 to 80 parts by weight of silica is blended per 100 parts by weight of the base rubber, and the compounding ingredient (that is a premix of the branched, organoxy group-containing polysiloxane (A) and the silane coupling agent (B) and/or powder (C)) is blended in such an amount that the branched, organoxy group-containing polysiloxane (A) may account for about 0.2 to 30% by weight, preferably about 1 to 10% by weight of the entire composition. It is acceptable to use a mixture of two or more compounding ingredients.

It is preferred that the rubber composition contains the silane coupling agent in the above-described amount.

In addition to the above-mentioned essential components, the rubber composition of the invention may have blended therein various additions e.g. as commonly used in tire and other general purpose rubbers, for example, carbon black,
vulcanizing or crosslinking agents, vulcanization or crosslinking accelerators, various oils, antioxidants, fillers, and plasticizers. These components are milled by a conventional technique into a composition, which is then vulcanized or crosslinked. The amounts of these additives are conventional insofar as they do not compromise the benefits of the invention.

A tire having a tread formed of a rubber as disclosed herein, and a method of making such a tire, are further objects of the invention.

### EXAMPLE

Examples of the invention are given below by way of illustration and not by way of limitation.

### Synthesis Example 1

### Branched, organoxy group-containing polysiloxane (1)

A 1-liter separable flask equipped with a stirrer, condenser, and thermometer was charged with 160 g of a compound represented by the average compositional formula: CH₃-Si(OCH₃)O_{1/2} and 0.8 g of an acidic ion exchange resin. With stirring at 20 to 50°C, 120 g of deionized water was slowly added to the flask. Thereafter, stirring was continued for 2 hours at 68°C. Then the flask was heated up to 140°C under atmospheric pressure for distilling off the methanol formed. The flask was cooled to 80°C, at which vacuum distillation was effected at 20 mmHg, yielding 110 g of the end compound. On GPC, the compound had an average molecular weight of 1,500. On NMR analysis, the compound was identified to be a branched, organoxy group-containing polysiloxane having the following compositional ratio.

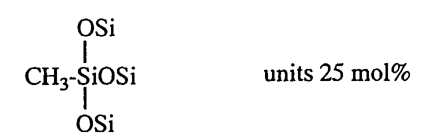

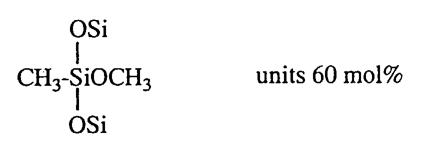

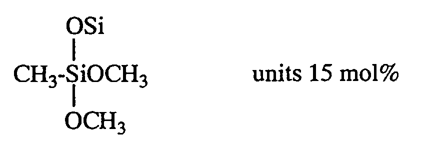

The content of CH₃-SiZ₃ was 100 mol%, and the content of CH₃-SiZ'₃ (included in CH₃-SiZ₃) was 25 mol%.

### Synthesis Example 2

### Branched, organoxy group-containing polysiloxane (2)

The procedure of Synthesis Example 1 was repeated except that the amount of deionized water added was changed. On GPC, the compound had an average molecular weight of 50,000. The compound was identified to be a branched, organoxy group-containing polysiloxane having a compositional ratio that the content of CH₃-SiZ₃ was 100% by weight and the content of CH₃-SiZ'₃ (included in CH₃-SiZ₃) was 45 mol%.

### Synthesis Example 3

### Branched, organoxy group-containing polysiloxane (3)

The procedure of Synthesis Example 1 was repeated except that dimethyldimethoxysilane was further added as an additional organoxysilane and the amount of deionized water added was changed. On GPC, the compound had an average molecular weight of 2,100. The compound was identified to be a branched, organoxy group-containing polysiloxane having a compositional ratio that the content of (CH₃)₂-SiZ₂ was 50% by weight, the content of CH₃-SiZ₃ was 50% by weight, and the content of CH₃-SiZ'₃ (included in CH₃-SiZ₃) was 20 mol%.

### Synthesis Example 4

For comparison purposes, a compound of the following structure was synthesized by reacting methylhydrogenpolysiloxane with ethanol. On NMR analysis, the compound did not contain any structural units of CH₃-SiZ'₃ type.

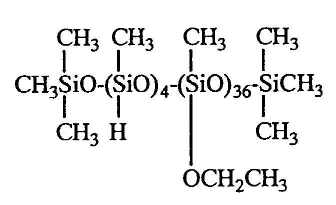

### Examples and Comparative Examples

The components shown in Table 1 were mixed in a closed mixer. The mixture was further milled with a vulcanization accelerator and sulfur on an open roll mill, yielding a rubber composition. The rubber composition was press vulcanized in a mold of 15x15x0.2 cm at 160°C for 20 minutes into a rubber sheet (test piece), which was evaluated for vulcanized properties.

The components other than the polysiloxane used in Examples are the following commercially available products.
Natural rubber: RSS#1
SBR: Nipol NS116 (Nippon Zeon K.K.)
BR: NP1220 (Nippon Zeon K.K.)
Silica: Nipsil AQ (Nippon Silica K.K.)
Silane coupling agent: KBE-846 (Shin-Etsu Chemical Co., Ltd.), bis[3-(triethoxysilyl)propyl]tetrasulfide Carbon black: Seast KH (Tokai Carbon K.K.)
Powder sulfur: powdered sulfur treated with 5% oil
Antioxidant 6C: N-phenyl-N'-(1,3-dimethylbutyl)-p-phenylenediamine
Vulcanization accelerator CZ: N-cyclohexyl-2-benzothiazyl-sulfenamide
Zinc oxide: Zinc White No. 3
Stearic acid: industrial stearic acid

The following tests were employed for examining the properties of rubber compositions and the vulcanized properties of the test pieces.

### Unvulcanized properties

(1) Mooney viscosity
   measured at 100°C according to JIS K-6300
(2) Vulcanization rate
   A time taken until a vulcanization of 95% was reached at 160°C was measured according to JIS K-6300.
(3) Scorching time
   A time taken until a viscosity increased 5 points at 125°C was measured according to JIS K-6300.

### Vulcanized properties

(1) Carbon/silica dispersed state
The vulcanized rubber sheet was cut with a knife. The cross section was visually observed to see whether there were left carbon and silica agglomerates which were not thoroughly dispersed in rubber.
- Excel.:: uniform dispersion, with few carbon and silica agglomerates
- Good:: some carbon and silica agglomerates, otherwise acceptably dispersed
- Fair:: powder-like particles found on the cut section, numerous carbon and silica agglomerates

(2) 300% deflection stress, breaking strength, breaking extension
Measured according to JIS K-6251 (dumbbell No. 3)
(3) tanδ
Using a viscoelasticity meter Rheolograph Solid by Toyo Seiki K.K., measurement was made at 20 Hz, an initial elongation of 10%, and a dynamic distortion of 2% (specimen width 5 mm, temperature 0°C and 60°C).
(4) Abrasion resistance
An abrasion loss was measured by a Lanborn type tester and expressed as an index according to the following equation.
Abrasion resistance (index) = [(abrasion loss of reference specimen)/(abrasion loss of test specimen)]x100
The results of evaluation are shown in Table 1.

**Table 1**

| Composition (pbw) | | Example | | | | Comparative Example | | |
|---|---|---|---|---|---|---|---|---|
| | | 1 | 2 | 3 | 4 | 1 | 2 | 3 |
| NR (RSS#1) | | 50.0 | 50.0 | 50.0 | 50.0 | 50.0 | 50.0 | 50.0 |
| SBR (NS116) | | 50.0 | 50.0 | 50.0 | 50.0 | 50.0 | 50.0 | 50.0 |
| Silica | | 25.0 | 25.0 | 25.0 | 25.0 | 25.0 | 25.0 | 25.0 |
| Diethylene glycol | | 2.5 | 2.5 | 2.5 | 2.5 | 2.5 | 2.5 | 2.5 |
| Silane coupling agent | | 1.25 | 1.25 | 1.25 | 1.0 | 2.5 | 1.25 | 1.25 |
| Synthesis Example 1 | | 1.25 | | | 1.5 | | | |
| Synthesis Example 2 | | | 1.25 | | | | | |
| Synthesis Example 3 | | | | 1.25 | | | | |
| Synthesis Example 4 | | | | | | | 1.25 | |
| T unit-free silicone A | | | | | | | | 1.25 |
| Carbon black | | 25.0 | 25.0 | 25.0 | 25.0 | 25.0 | 25.0 | 25.0 |
| Zinc oxide | | 3.0 | 3.0 | 3.0 | 3.0 | 3.0 | 3.0 | 3.0 |
| Stearic acid | | 1.0 | 1.0 | 1.0 | 1.0 | 1.0 | 1.0 | 1.0 |
| Antioxidant 6C | | 1.0 | 1.0 | 1.0 | 1.0 | 1.0 | 1.0 | 1.0 |
| Powder sulfur | | 2.1 | 2.1 | 2.1 | 2.1 | 2.1 | 2.1 | 2.1 |
| Vulcanization accelerator CZ | | 1.0 | 1.0 | 1.0 | 1.0 | 1.0 | 1.0 | 1.0 |
| Unvulcanized properties | Mooney viscosity | 85.20 | 85.50 | 86.00 | 85.00 | 93.00 | 87.90 | 97.90 |
| | Vulcanization rate | 12.60 | 13.20 | 12.80 | 12.90 | 15.90 | 14.30 | 14.60 |
| | Scorching time | 18.90 | 18.50 | 18.90 | 19.40 | 17.10 | 18.20 | 19.10 |
| Vulcanized properties | Carbon/silica dispersed state | Excel. | Excel. | Excel. | Excel. | Fair | Good | Fair |
| | 300% diflection stress (Mpa) | 14.30 | 13.90 | 13.50 | 12.40 | 11.00 | 11.50 | 11.10 |
| | Breaking strength (Mpa) | 25.70 | 24.70 | 23.50 | 22.90 | 21.10 | 22.40 | 20.40 |
| | tanδ (0°C) | 0.51 | 0.52 | 0.52 | 0.52 | 0.50 | 0.51 | 0.48 |
| | tanδ (60°C) | 0.22 | 0.21 | 0.20 | 0.22 | 0.24 | 0.22 | 0.25 |
| | Abrasion resistance(index) | 125.00 | 123.00 | 124.00 | 119.00 | 100.00 | 117.00 | 106.00 |
| Note: T unit-free silicone A is a silicone resin consisting of 40 mol% of M units (Me₃SiO_{1/2}) and 60 mol% of Q units (SiO₂) and having an average molecular weight of 4,000. | | | | | | | | |

The branched, organoxy group-containing polysiloxane has been found to enable an increased processing efficiency as compared with prior art well-known alkoxy group-containing polyxiloxanes, in that it may improve the dispersion of silica when used with a silane coupling agent or after impregnation of a powder therewith, thereby improving physical properties (e.g., tensile properties, abrasion resistance and tan6) of rubber compositions so that the rubber compositions are suited for manufacture of tire treads.

Japanese Patent Application No. 11-291098 is incorporated herein by reference.

Reasonable modifications and variations are possible from the foregoing disclosure of embodiments without departing from the general teachings herein.

## Claims

1. A rubber compounding ingredient comprising
(A) organoxy group-containing polysiloxane comprising 30 to 100 mol% of structural units (T units) of the formula (1):
R-SiZ₃ (1)
wherein R is a substituted or unsubstituted monovalent hydrocarbon group of 1 to 18 carbon atoms, Z is an OX group or siloxane residue, and X is hydrogen or a monovalent hydrocarbon group, and containing, among said T units, 10 to 50 mol% of structural units (T-3 units) of the formula (2):
R-SiZ'₃ (2)
wherein R is as defined above, and Z' is a siloxane residue, the T-3 units providing branching sites, said organoxy group-containing polysiloxane having a number average molecular weight of 500 to 300,000 and a branched structure within the molecule, and
(B) silane coupling agent,
the weight ratio of component (A) to (B) being from 95/5 to 5/95.

2. A rubber compounding ingredient of claim 1 wherein the organoxy group-containing polysiloxane (A) is obtained or obtainable by hydrolysing alkoxy group-containing polysiloxane of the following average compositional formula (3):
R-Si(Y)ₐO_{(3-a)/2} (3)
wherein R is as defined above, Y is an alkoxy group, and "a" is a positive number of 1.0 to 2.5, alone or by cohydrolyzing an alkoxy group-containing polysiloxane of the formula (3) and another alkoxysilane or a partial hydrolyzate thereof.

3. The rubber compounding ingredient of claim 2 wherein the alkoxy group-containing polysiloxane of the formula (3) has been obtained by reacting a chlorosilane of the following general formula (4):
R-SiCl₃ (4)
wherein R is as defined above with water in the presence of an alcohol.

4. A compounding ingredient for rubber comprising
(A) organoxy group-containing polysiloxane comprising 30 to 100 mol% of structural units (T units) or the formula (1):
R-SiZ₃ (1)
wherein R is a substituted or unsubstituted monovalent hydrocarbon group of 1 to 18 carbon atoms, Z is an OX group or siloxane residue, and X is hydrogen or a monovalent hydrocarbon group, and containing, among said T units, 10 to 50 mol% of structural units (T-3 units) of the formula (2):
R-SiZ'₃ (2)
wherein R is as defined above, and Z' is a siloxane residue, the T-3 units providing branching sites, said organoxy group-containing polysiloxane having a number average molecular weight of 500 to 300,000 and a branched structure within the molecule, and
(C) a powder impregnated therewith,
the weight ratio of component (A) to (C) being from 70/30 to 5/95.

5. A rubber compounding ingredient of claim 4 wherein the organoxy group-containing polysiloxane (A) is obtained or obtainable by hydrolysing alkoxy group-containing polysiloxane of the following average compositional formula (3):
R-Si(Y)ₐO_{(3-a)/2} (3)
wherein R is as defined above, Y is an alkoxy group, and "a" is a positive number of 1.0 to 2.5, alone or by cohydrolyzing an alkoxy group-containing polysiloxane of the formula (3) and another alkoxysilane or a partial hydrolyzate thereof.

6. The rubber compounding ingredient of claim 5 wherein the alkoxy group-containing polysiloxane of the formula (3) has been obtained by reacting a chlorosilane of the following general formula (4):
R-SiCl₃ (4)
wherein R is as defined above with water in the presence of an alcohol.

7. The rubber compounding ingredient of claim 4 further comprising (B) a silane coupling agent, the weight ratio of component (A) to (B) being from 95/5 to 5/95.

8. A rubber composition comprising, in admixture, a base rubber and the compounding ingredient of any one of claims 1 to 7.

9. The rubber composition of claim 8 which is formulated for tire treads.

10. The rubber composition of claim 8 wherein the content of component (A) is 0.2 to 30% by weight of the entire composition.

11. The rubber composition of claim 8 further comprising silica.

12. The use, in the manufacture of a vulcanisable rubber composition containing particulate silica, of branched organoxy group-containing polysiloxane (A) as defined in any one of claims 1 to 3 to improve dispersion of the silica in the rubber composition.

13. Use according to claim 12, comprising as a step the preparatio using the polysiloxane (A), of a compounding ingredient according to any one of claims 1 to 7.

14. Preparation of a compounding ingredient according to any one of claims 1 to 7, or use according to claim 12 or 13, comprising as a preliminary step the preparation of the branched organoxy-containing polysiloxane (A).
